# EUROPÄISCHE PATENTSCHRIFT

(11) **EP 1 522 561 B1**
(45) Veröffentlichungstag und Bekanntmachung des Hinweises auf die Patenterteilung: **27.05.2009**
(21) Anmeldenummer: 04019345.0
(22) Anmeldetag: 14.08.2004
(51) Int. Cl.: C09D 11/00, B41M 7/00, B41M 1/30

(54) **Verwendung einer pigmentierten Tinte**
Use of an ink containing pigments
Utilisation de l'encre pigmentée

(30) Priorität: 09.10.2003 DE 10347034
(43) Veröffentlichungstag der Anmeldung: 13.04.2005
(73) Patentinhaber: J.S. Staedtler GmbH & Co KG, 90427 Nürnberg (DE)
(72) Erfinder: Müller, Anke, 95473 Creussen (DE); Engel, Stefan, Dr., 90607 Rückersdorf (DE)

(56) Entgegenhaltungen:
- EP-A- 0 509 109
- EP-A- 0 974 626
- US-A- 5 512 089
- US-A- 5 640 187

## Beschreibung

Die Erfindung betrifft die Verwendung einer wässrigen, pigmentierten Tinte für die Bedruckung unbeschichteter Vinylfolien oder mit Vinyl beschichteten Untergründen.

Tinten für die Bedruckung von Folien sind prinzipiell bekannt.
Bei der Bedruckung von Vinylfolien gilt es die Beschichtung beschichteter und unbeschichteter Folien zu unterscheiden.

Für die Bedruckung unbeschichteter Folien sind Spezialtinten auf nicht wässriger Basis bekannt, die auch als sogenannte Solvent-Tinten bezeichnet werden.
Nachteilig bei derartigen Tinten ist, dass diese Tinten stark und unangenehm riechen, gesundheitsschädlich und entflammbar sind. Dies gilt auch teilweise für sogenannte ECO-Solvent oder Light-Solvent-Tinten. Weiter ist es als nachteilig anzusehen, dass Solvent- Tinten nur auf sogenannten Solvent-Druckern verarbeitet werden kann, welche sehr teuer sind. Unstrittig ist, dass die beschriebenen Solvent-Tinten den Untergrund anlösen, diesen an- bzw. aufrauen, was zur Folge hat, dass der getrocknete Abstrich eine gute Kratzfestigkeit aufweist.
Nachteilig ist beim Einsatz von Solvent-Druckern, dass diese Drucker groß gebaut sind, da aufgrund der Verwendung von organischen Lösungsmitteln, wie beispielsweise Butylglykolacetat, Absauganlagen oder Kapselungen zum Schutz des Bedienpersonals vorgesehen sein müssen. Zudem sind Solvent Drucker teurer als Drucker für wässrige Systeme, da die verbauten Komponenten, wie beispielsweise das Schlauchsystem gegen organische Lösungsmittel beständig sein müssen.

Des Weiteren können Spezialfolien mit konventionellen wässrigen Tinten bedruckt werden, falls die Vinylfolien mit Beschichtung oder einer rauen Oberfläche versehen sind oder anderweitig aufgeraut wurden.

Der entscheidende Nachteil ist jedoch, dass Folien mit speziellen Beschichtungen immens teuer sind.
Die Spezialbeschichtungen weisen eine raue Oberfläche, eine definierte Porosität auf, um den mit den wässrigen Tinten erzeugten Druckbildern oder Abstrichen, auf derartigen Folien eine gute Kratzfestigkeit zu verleihen.

Weiter ist aus EP 0 974 626 A1 eine wässrige Pigmenttinte zum Bedrucken unbeschichteter Vinyl-Untergründe mittels Piezo Ink Jet Drucksystemen bekannt.
Diese Tinte setzt sich aus einem wässrigen Trägermedium, Trocknungsverzögerer, einem darin unlöslichen Farbmittel, einem Dispergiermittel und Netzmittel zusammen.
Nachteilig bei einer derartigen Tinte ist es, dass die Tinten aufgrund eines hohen Anteils an Trocknungsverzögerer auf der Basis von Glykolen sehr schlecht trocknen und nach dem Druck zum verwischen oder gar verschmieren neigen. Die Druckbilder müssen nach dem Druckvorgang bei hohen Temperaturen getrocknet werden. Weiter hat es sich als nachteilig herausgestellt, dass diese Tinten nur nach aufwändigem Trocknungsvorgang, Temperaturen um 200 Grad Celsius, kratzfest sind. Bei derartig hohen Temperaturen kommt es teilweise zum Verzug bis hin zur Zerstörung der Folien.

Zum Trocknen der vorbeschriebenen erzeugten Druckbilder sind Drucker mit Heizvorrichtungen bekannt. Die Heizvorrichtungen sind im Wesentlichen plattenförmig ausgebildet und derart angeordnet, dass das zu bedruckende Substrat über diese Flächen gleitet um das Substrat anzuwärmen. Einem Druckvorgang ist örtlich und zeitlich eine weitere Heizzone nachgeschaltet, die die verdruckte Tinte trocknet. Nachteilig ist es bei derartig aufgebauten Druckern, dass zwei Heizzonen zur sicheren Trocknung der Tinte auf dem Substrat nötig sind.

Der Erfindung liegt daher die **Aufgabe** zu Grunde, eine alternative wässrige Tinte zur Bedruckung unbeschichteter bzw. unbehandelter Vinyluntergründe zu schaffen, die die eingangs genannten Nachteile nicht aufweist und die nach dem Druck schnell trocknet und eine hohe Kratzfestigkeit gewährleistet. Es ist zudem Aufgabe der Erfindung, eine Tinte zu schaffen, die nach dem Trocknen wasserfest ist.

Diese Aufgabe, eine Tinte der eingangs genannten Art zu schaffen, wird mit den Merkmalen des Anspruchs 1 gelöst. Bevorzugte Ausführungsformen und vorteilhafte Weiterbildungen und Anwendungen sind in den ergänzenden Ansprüchen umfasst.

Die erfindungsgemäße Tinte zur Bedruckung von unbehqandelten Vinylfolien oder mit Vinyl beschichteten Untergründen mittels Ink-Jet Drucksystemen besteht aus einer flüssigen Trägersubstanz, wasserunlöslichen Farbmitteln, polymerem Bindemittel sowie weiteren Zusatzstoffen, wobei sich die flüssige Trägersubstanz aus Wasser und wassermischbaren Trocknungsverzögerer zusammensetzt, wobei die flüssige Trägersubstanz einen Gehalt von mindestens 75 Gew.%, vorzugsweise 80 Gew.% Wasser aufweist.
Als Zusatzstoff beinhaltet die Tinte einen pH-Regulator oder Einstellmittel, eine aminhaltige Substanz, die einen Gehalt zwischen 0,5 bis 10 Gew. % an der Tintenzusammensetzung ausmacht.
Das in der Tinte eingesetzte Bindemittel, beispielweise ein Acrylatharz, liegt im basischen Bereich in gelöster Form vor, während das Acrylatharz im sauerem oder neutralen Bereich unlöslich ist.
Zum Zeitpunkt des Druckvorgangs weist die erfindungsgemäße Tinte einen pH-Wert größer 7,5, vorzugsweise größer 8,5 auf, was dazu führt, dass das Bindemittel in der Tinte in gelöster Form vorliegt. Durch einen gewünschten und über die Menge des pH-Einstellmittels gezielt gesteuerten Umschlag des ph-Wertes vom basischen Bereich in Richtung saueren Bereich, härtet das Bindemittel aus. Da das Amin, eine flüchtige Substanz, nach dem Druckvorgang verdunstet, führt dies aufgrund des geringer werdenden Anteils an Aminen zu einer pH-Wert Änderung in Richtung sauer, wodurch sich das Bindemittel verfestigt und auf dem Druckmedium eine kratzfeste getrocknete Tintenschicht erzeugt.

Derartige Tinten finden in Ink-Jet Drucksystemen Verwendung, speziell bei Verwendung der Piezo-Technik.

Die Erfindung soll nachfolgend anhand einiger Tintenbeispiele näher beschrieben werden.

### Beispiel 1 (Rahmenbeispiel):

| | |
|---|---|
| 20 bis 90 Gew.-% | Wasser als Lösungsmittel (LM), |
| 5 bis 40 Gew.-% | Trocknungsverzögerer (TV), |
| 0,5 bis 20 Gew.-% | Bindemittel (BM), |
| 1 bis 50 Gew.-% | Farbmittel (FM), |
| 0,5 bis 10 Gew.-% | pH-Einstellmittel (PH), |
| 0,01 bis 1 Gew.-% | Konservierungsmittel (KM) |
| 0,05 bis 2 Gew.-% | Netzmittel (NM), |
| 0 bis 5 Gew.-% | weitere Zusätze (Z) |

### Beispiel 2: Schwarz

| | |
|---|---|
| 51,9 Gew.-% | Wasser als Lösungsmittel (LM), |
| 12,0 Gew.-% | Trocknungsverzögerer (TV), |
| 5,0 Gew.-% | Bindemittel (BM), |
| 25,0 Gew.-% | Pigment Black 7 (FM), |
| 5,0 Gew.-% | pH-Regulator (PH), |
| 0,1 Gew.-% | Konservierungsmittel (KM) |
| 1,0 Gew.-% | Netzmittel (NM), |

### Beispiel 3: Magenta

| | |
|---|---|
| 60,5 Gew.-% | Wasser als Lösungsmittel (LM), |
| 13,0 Gew.-% | Trocknungsverzögerer (TV), |
| 7,4 Gew.-% | Bindemittel (BM), |
| 16,0 Gew.-% | Pigment Red 122 (FM), |
| 2,0 Gew.-% | pH-Regulator (PH), |
| 0,1 Gew.-% | Konservierungsmittel (KM) |
| 1,0 Gew.-% | Netzmittel (NM), |

### Beispiel 4 Magenta light

| | |
|---|---|
| 73,6 Gew.-% | Entionisiertes Wasser (LM), |
| 13,0 Gew.-% | Butyldiglykol + Solvenon (TV), |
| 5,0 Gew.-% | Bindemittel (BM), |
| 5,3 Gew.-% | Chinacridon Komplex (FM), |
| 2,0 Gew.-% | Ammoniaklösung 25% (PH), |
| 0,1 Gew.-% | Grotan Bk (KM) |
| 1,0 Gew.-% | Silikontensid (NM), |

### Beispiel 5 Cyan

| | |
|---|---|
| 64,9 Gew.-% | Entionisiertes Wasser (LM), |
| 13,0 Gew.-% | Butyldiglykol + Solvenon (TV), |
| 5,0 Gew.-% | Bindemittel (BM), |
| 11,0 Gew.-% | Pigment Blue 15 (FM), |
| 5,0 Gew.-% | Dimethylethanolamin (PH), |
| 0,1 Gew.-% | Proxel G (KM) |
| 1,0 Gew.-% | Fettalkoholpolyglycolether (NM), |

### Beispiel 6: Cyan light

| | |
|---|---|
| 72,3 Gew.-% | Entionisiertes Wasser (LM), |
| 13,0 Gew.-% | Butyldiglykol + Solvenon (TV), |
| 5,0 Gew.-% | Bindemittel (BM), |
| 3,6 Gew.-% | Phlalocyanin Komplex (FM), |
| 5,0 Gew.-% | Dimethylethanolamin (PH), |
| 0,1 Gew.-% | Grotan Bk (KM) |
| 1,0 Gew.-% | Silikontensid (NM), |

### Beispiel 7: Gelb

| | |
|---|---|
| 53,4 Gew.-% | Entionisiertes Wasser (LM), |
| 13,0 Gew.-% | Butyldiglykol + Solvenon (TV), |
| 5,0 Gew.-% | Bindemittel (BM), |
| 22,5 Gew.-% | Pigment Yellow 155 (FM), |
| 5,0 Gew.-% | Dimethylethanolamin (PH), |
| 0,1 Gew.-% | Grotan Bk (KM) |
| 1,0 Gew.-% | Fettalkoholpolyglycolether (NM), |

Jede der Tinten aus den Beispielen 1 bis 7 enthält als hauptsächliches Lösungsmittel (LM) Wasser.
Als flüssige Trägersubstanz weist die Tinte Trocknungsverzögerer (TV) auf. Trocknungsverzögerer sind beispielsweise Glykole wie Butyldiglykole oder Diethylenglycole und Solvenone.

Die erfindungsgemäße Tinte weist mindestens ein Amine (PH) oder aminhaltige Substanz zum Einstellen des pH-Wertes auf. Durch die basischen Amine (PH) oder basischen aminhaltigen Substanzen wird die damit hergestellte Tinte basisch, wodurch zudem der Verschleiß am Druckkopf minimiert, sowie die Haltbarkeit der Tintenzuleitungssysteme verlängert wird. Die Tinte weist hierbei einen pH-Wert größer 7,5, vorzugsweise größer 8,5 auf.
Beispiele für Amine (PH) sind Ethanolamin, Triethanolamin, eine Ammoniaklösung, Dimethylethanolamin sowie Mischungen dieser genannten Amine (PH).
Die in der Tinte eingesetzten Amine (PH) können mit der allgemeinen Formel N(R1 R2 R3) beschrieben werden, wobei die freien Reste R1, R2 und R3 unabhängig voneinander eine Wasserstoffgruppe (H), eine Methylgruppe (CH₃), eine Ethylengruppe oder eine Ethanolgruppe (CH₂ CH₂ OH) sein können.

Als Farbmittel (FM) können Pigmente Verwendung finden. Beispiele für gelbe Pigmente sind Pigment Yellow 155, 150, 13 und 74. Als Vertreter für rote Pigmente seien Pigment Red 122 oder allgemein Pigmente mit einem Chinacridon Komplex genannt. Blaue Pigmente können Pigment Blue 15:3, 15 oder ein Pigment mit einem Phtalocyanin Komplex sein. Pigment Black 7 oder ganz allgemein Ruß-Dispersionen sind Beispiele für schwarze Tinten.
Dabei ist es unerheblich, ob die Pigmente als Farbmittel (FM) in trockener oder dispergierter Form vorliegen. Diese Dispersionen werden auch als Farbkonzentrate bezeichnet und sind in der Regel wässrige Pigmentdispersionen, deren Feststoffgehalt 40 Gew. % in der Regel nicht überschreitet.

In der Regel werden die erfindungsgemäßen Tinten als Tintensätze angeboten, um bei farbigen Drucken das gesamte Farbspektrum abbilden zu können. Ein derartiger Tintensatz besteht aus den Farben cyan, magenta, gelb, schwarz und/oder den Light-Farben von cyan und magenta.

Konservierungsmittel können beispielsweise Triazine oder Lösungen von Isothiazolinon-Derivaten sein. Beispiele einiger Handelsprodukte sind Proxel G, Grotan BK, Parmetol K40 oder Parmetol A 28.

Als Netzmittel finden in den erfindungsgemäßen Tinten Fluortenside, Silikontenside und/oder Fettalkoholpolyglycolether Verwendung.

Verwendung findet eine derartige Tinte beim Bedrucken von unbehandelten Vinylfolien oder mit Vinyl beschichteten Untergründen mittels Ink-Jet-Druck-Systemen, die mindestens eine Heizvorrichtung in Form einer Heizplatte und/oder einer Infrarotheizung aufweisen.
Die Heizplatte kann hierbei direkt unterhalb vor und/oder nach dem Druckkopfes, angeordnet sein, wobei sich die Heizplatte über die gesamte Bahn, die der Druckkopf zurücklegt, erstreckt. Alternativ oder zusätzlich kann die Heizvorrichtung als ein Infrarotstrahler ausgebildet sein, welcher oberhalb der zu bedruckenden Oberfläche angeordnet ist.

## Patentansprüche

1. Verwendung einer pigmentierten Tinte zur Bedruckung von unbehandelten Vinylfolien oder mit Vinyl beschichteten Untergründen mittels Piezo Ink Jet Drucksystemen, wobei die Drucksysteme mindestens eine Heizvorrichtung aufweisen, wobei die Tinte aus einer flüssigen Trägersubstanz, wasserunlöslichen Farbmitteln, polymerem Bindemittel, Trocknungsverzögerer, Netzmittel sowie weiteren Zusatzstoffen besteht, wobei sich die flüssige Trägersubstanz aus Wasser und wassermischbaren Trocknungsverzögerer zusammensetzt, wobei zumindest Butyldiglycol und Solvenon als Trocknungsverzögerer vorliegen, wobei die flüssige Trägersubstanz einen Gehalt von mindestens 80 Gew.% Wasser aufweist, wobei die Tinte als weiteren Zusatzstoff ein pH-Einstellmittel aufweist, wobei die Tinte einen pH-Wert größer 8,5 aufweist und wobei das polymere Bindemittel bei einem ph-Wert größer 8,5, in der flüssigen Trägersubstanz, in gelöster Form vorliegt.

2. Verwendung einer Tinte nach Anspruch 1,
**dadurch gekennzeichnet,**
**dass** das ph-Einstellmittel ein Amin oder aminhaltige Substanz ist
**und dass** das Amin oder die aminhaltige Substanz basisch ist.

3. Verwendung einer Tinte nach Anspruch 1 oder 2,
**dadurch gekennzeichnet,**
**dass** das Amin ein Dimethylethanolamin, ein Triethanolamin, eine Ammoniaklösung oder eine Mischung dieser Substanzen ist.

4. Verwendung einer Tinte nach einem der vorhergehenden Ansprüche,
**dadurch gekennzeichnet, dass** die Tinte
| | |
|---|---|
| 20 bis 90 Gew.-% | Wasser als Lösungsmittel.(LM), |
| 5 bis 40 Gew.-% | Trocknungsverzögerer (TV), |
| 0,5 bis 20 Gew.-% | Bindemittel (BM), |
| 1 bis 50 Gew.-% | Farbmittel (FM), |
| 0,5 bis 10 Gew.-% | pH-Regulator (PH), |
| 0,01 bis 1 Gew.-% | Konservierungsmittel (KM) |
| 0,05 bis 2 Gew.-% | Netzmittel (NM), |
| 0 bis 5 Gew.-% | weitere Zusätze (Z) |
enthält.

5. Verwendung eines Tintensatzes nach einem oder mehreren der vorstehenden Ansprüche,
**dadurch gekennzeichnet,**
**dass** der Tintensatz die Farben cyan, magenta, gelb, schwarz und/oder die Light-Farben von cyan und magenta aufweist.

## Claims

1. Use of pigmented ink for printing untreated vinyl films or substrates, which are coated with vinyl, by means of piezo ink-jet printing systems, wherein the printing systems comprise at least one heating device, wherein the ink consists of a liquid carrier substance, water-insoluble colorants, polymer binders, drying retardants, wetting agents and further additives, wherein the liquid carrier substance is composed of water and water-miscible drying inhibitors, wherein at least butyldiglycol and Solvenon as drying inhibitors are present, wherein the liquid carrier substance has a content of at least 80 weight % water, wherein the ink has a pH setting agent as further additive, wherein the ink has a pH value greater than 8.5 and wherein the polymer binder in the case of a pH value greater than 8.5 is present in the liquid carrier substance in dissolved form.

2. Use of an ink according to claim 1, **characterised in that** the pH setting agent is an amine or substance containing amine and that the amine or the substance containing amine is basic.

3. Use of an ink according to claim 1 or 2, **characterised in that** the amine is a diamethylethanol amine, a triethanol amine, an ammonium solvent or a mixture of these substances.

4. Use of an ink according to any one of the preceding claims, **characterised in that** the ink contains
| | |
|---|---|
| 20 to 90 weight % | water as solvent (LM), |
| 5 to 40 weight % | drying retardant (TV), |
| 0.5 to 20 weight % | binder (BM), |
| 1 to 50 weight % | colorant (FM) |
| 0.5 to 10 weight % | pH regulator (PH), |
| 0.01 to 1 weight % | preservative (KM), |
| 0.05 to 2 weight % | wetting agent (NM), |
| 0 to 5 weight % | further additives (Z). |

5. Use of an ink set according to one or more of the preceding claims, **characterised in that** the ink set comprises the colours cyan, magenta, yellow, black and/or the light colours of cyan and magenta.

## Revendications

1. Utilisation d'une encre pigmentée pour l'impression de feuilles de vinyle non traitées ou de fonds enduits de vinyle au moyen de systèmes d'impression jet d'encre piézo, dans laquelle les systèmes d'impression présentent au moins un dispositif de chauffage, dans laquelle l'encre se compose d'une substance porteuse liquide, de colorants insolubles dans l'eau, d'un liant polymère, d'un retardateur de séchage, d'un agent mouillant ainsi que d'autres additifs, dans laquelle la substance porteuse liquide se compose d'eau et de retardateurs de séchage miscibles à l'eau, dans laquelle au moins du butyldiglycol et du Solvenon sont présents en tant que retardateurs de séchage, dans laquelle la substance porteuse liquide présente une teneur en eau au moins égale à 80 % en masse, dans laquelle l'encre présente en tant qu'additif supplémentaire un régulateur de pH, dans laquelle l'encre présente une valeur de pH supérieure à 8,5, et dans laquelle le liant polymère, avec une valeur de pH supérieure à 8,5, se présente dans la substance porteuse liquide sous forme dissoute.

2. Utilisation d'une encre selon la revendication 1, **caractérisée en ce que** le régulateur de pH est une amine ou une substance contenant une amine, et **en ce que** l'amine ou la substance contenant une amine est basique.

3. Utilisation d'une encre selon la revendication 1 ou 2, **caractérisée en ce que** l'amine est une diméthyléthanolamine, une triéthanolamine, une solution d'ammoniac ou un mélange de ces substances.

4. Utilisation d'une encre selon l'une des revendications précédentes, **caractérisée en ce que** l'encre contient
| | |
|---|---|
| 20 à 90 % en masse | d'eau en tant que solvant (LM), |
| 5 à 40 % en masse | de retardateur de séchage (TV), |
| 0,5 à 20 % en masse | de liant (BM), |
| 1 à 50 % en masse | de colorant (FM), |
| 0,5 à 10 % en masse | de régulateur de pH (PH), |
| 0,01 à 1 % en masse | de conservateur (KM), |
| 0,05 à 2 % en masse | d'agent mouillant (NM), |
| 0 à 5 % en masse | d'autres additifs (Z). |

5. Utilisation d'un jeu d'encres selon une ou plusieurs des revendications précédentes, **caractérisé en ce que** le jeu d'encres présente les couleurs cyan, magenta, jaune, noir et/ou les couleurs claires du cyan et du magenta.
